Europäisches Patentamt

European Patent Office

Office européen des brevets

(19)

(11) **EP 0 654 193 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(21) Anmeldenummer: **93917758.0**

(22) Anmeldetag: **05.08.1993**

(51) Int Cl.⁶: **H04B 10/18**

(86) Internationale Anmeldenummer:
**PCT/EP93/02092**

(87) Internationale Veröffentlichungsnummer:
**WO 94/03987 (17.02.1994 Gazette 1994/05)**

(54) **VERFAHREN UND SCHALTUNGSANORDNUNG ZUR ELEKTRISCHEN KOMPENSATION VON DURCH LASERCHIRP UND FASERDISPERSION VERURSACHTEN SIGNALVERZERRUNGEN**

PROCESS AND CIRCUITRY FOR ELECTRIC COMPENSATION OF SIGNAL DISTORTION CAUSED BY LASER CHIRP AND FIBRE DISPERSION

PROCEDE ET ENSEMBLE DE CIRCUITS POUR LA COMPENSATION ELECTRIQUE DE DISTORSIONS DE SIGNAUX DUES AUX FLUCTUATIONS DE FREQUENCE LASER ET A LA DISPERSION DANS LES FIBRES OPTIQUES

(84) Benannte Vertragsstaaten:
**AT BE CH DE FR GB IT LI NL SE**

(30) Priorität: **06.08.1992 EP 92113449**

(43) Veröffentlichungstag der Anmeldung:
**24.05.1995 Patentblatt 1995/21**

(73) Patentinhaber: **SIEMENS AKTIENGESELLSCHAFT**
**80333 München (DE)**

(72) Erfinder: **GOTTWALD, Erich, Dr.**
**D-83607 Holzkirchen (DE)**

(56) Entgegenhaltungen:
- **ELECTRONICS LETTERS. Bd. 27, Nr. 5 , 28. Februar 1991 , STEVENAGE GB Seiten 421 - 423 GYSEL 'Electrical predistortion to compensate for combined effect of laser chirp and fibre dispersion' in der Anmeldung erwähnt**
- **14TH EUROPEAN CONFERENCE ON OPTICAL COMMUNICATIONS, September 1988 , BRIGHTON GB Seiten 187 - 190 WEDDING 'Reduction of bit error rate in high speed optical transmission systems due to optimised electrical drive pulse shaping'**
- **ARCHIV FÜR ELEKTRONIK UND ÜBERTRAGUNGSTECHNIK Bd. 40, Nr. 5 , September 1986 , STUTTGART DE Seiten 283 - 288 PETERMANN ET AL 'Chirp Reduction in Intensity-Modulated Semiconductor Lasers for Maximum Transmission Capacity of Single-Mode Fibres'**
- **AGARD CONFERENCE PROCEEDINGS NO.383 GUIDED OPTICAL STRUCTURES IN THE MILITARY ENVIRONMENT, September 1985 , ISTANBUL TR Seiten 27.1 - 27.9 WALKER ET AL 'Wide bandwidth, long distance fibre-optic communication systems'**
- **ELECTRONICS LETTERS. Bd. 27, Nr. 5 , 28. Februar 1991 , STEVENAGE GB Seiten 421 - 423 GYSEL 'Electrical predistortion to compensate for combined effect of laser chirp and fibre dispersion'**

**Beschreibung**

In optischen Telekommunikationssystemen mit Signalübertragung über Lichtwellenleiter führt das Zusammenwirken von Laserchirp einerseits und Faserdispersion andererseits zu u.U. erheblichen Signalverzerrungen, die insbesondere bei Analogsignalübertragung (z.B. AM-CATV) im Wellenlängenfenster um 1,55 μm über Standard-Einmodenfasern die Reichweite solcher Systeme auf wenige hundert Meter beschränken können.

Laserchirp, d.h. die aussteuerungsabhängige Frequenzabweichung eines Lasers, kann durch den Einsatz externer Modulatoren umgangen werden, was allerdings mit einem merklichen Aufwand verbunden ist.

Der Faserdispersion, d.h. der wellenlängenabhängigen Streuung der Signallaufzeit im Lichtwellenleiter, kann man durch das Einspleißen von Faserstücken mit im Vergleich zur Standardfaser gegenläufiger Dispersion zu begegnen versuchen, womit man allerdings eine merkliche zusätzliche Dämpfung in Kauf nehmen muß.

Einen weiteren Lösungsansatz bieten elektronischen Kompensationsmaßnahmen; so sind aus ELECTRONICS LETTERS 27(1991)5 vom 28.02.1991, pp. 421...423, eine Allpaß- und eine Tiefpaßstruktur (mit Varactordiode) zur Kompensation der Faserdispersion durch entsprechende Signalverzögerungen bekannt.

Die Erfindung geht demgegenüber einen anderen Weg, um durch Laserchirp und Faserdispersion verursachte Signalverzerrungen in einem optischen Telekommunikationssystem elektrisch zu kompensieren.

Die Erfindung betrifft ein Verfahren und eine Schaltungsanordnung zur elektrischen Kompensation von durch Laserchirp und Faserdispersion verursachten Signalverzerrungen. Das Verfahren ist erfindungsgemäß dadurch gekennzeichnet, daß aus dem elektrischen Sende- u./o. Empfangssignal durch Quadrieren und nachfolgendes Differenzieren ein Korrektursignal abgeleitet wird, das nach einer an sich in Form einer Signalabschwächung erforderlichen Pegelkorrektur dem elektrischen Sende- bzw. Empfangssignal hinzugefügt wird;

die Schaltungsanordnung ist erfindungsgemäß dadurch gekennzeichnet, daß vom elektrischen Sende u./o. Empfangssignalweg ein Korrektursignalweg mit einem Quadrierer und einem nachfolgenden Differenzierglied abzweigt, der hinter einer nachfolgenden Pegelkorrekturschaltung über einen Addiereingang wieder in den elektrischen Signalweg einmündet, wobei in weiterer Ausgestaltung der Erfindung dem Quadrierer im Korrektursignalweg eine Pegelanpassungsschaltung vorgeschaltet sein kann.

Die Erfindung, die von einem zumindest in guter Näherung linearen und phasenstarren Zusammenhang zwischen der Lichtleistung und der optischen Frequenz des Lasers ausgeht und auf der Erkenntnis beruht, daß das am Ende einer dispersiven Übertragungsstrecke auftretende Signal im wesentlichen aus dem Originalsignal und einem elektrisch sehr einfach nachzubildenden Störterm besteht, bringt den Vorteil mit sich, durch Laserchirp und Faserdispersion verursachte Signalverzerrungen unabhängig vom mittleren Signalpegel mit sehr geringem schaltungstechnischen Aufwand empfangsseitig und/oder (bei definierter Streckenlänge) sendeseitig sehr wirksam elektrisch kompensieren zu können.

Anhand der Zeichnungen wird die Erfindung noch weiter erläutert. Dabei zeigt

Fig. 1    eine Schaltungsanordnung zur sendeseitigen elektrischen Kompensation und
Fig. 2    eine Schaltungsanordnung zur empfangsseitigen elektrischen Kompensation von laserchirp- und faserdispersionsbedingten Signalverzerrungen.

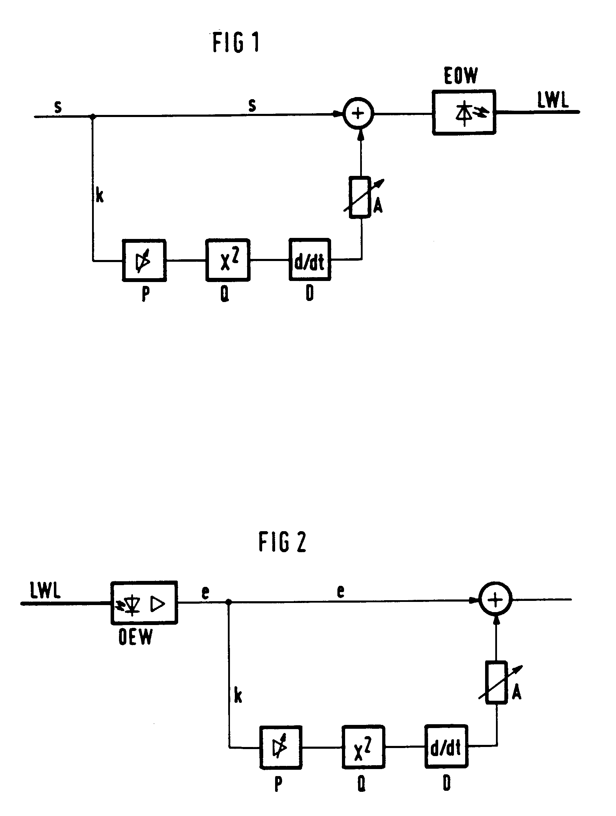

In Fig. 1 ist schematisch in einem zum Verständnis der Erfindung erforderlichen Umfange ein Ausführungsbeispiel einer Schaltungsanordnung zur elektrischen Kompensation von durch Laserchirp und Faserdispersion verursachten Signalverzerrungen in einem optischen Telekommunikationssystem dargestellt, in der ein elektrischer Sendesignalweg s über einen mit einer Laserdiode gebildeten elektrooptischen Wandler EOW zu einem Lichtwellenleiter LWL führt. Von dem elektrischen Sendesignalweg s zweigt ein Korrektursignalweg k ab, der einen Quadrierer Q und ein nachfolgendes Differenzierglied D aufweist und der hinter einem nachfolgenden Signalabschwächer A über einen Addiereingang wieder in den elektrischen Signalweg s einmündet; je nach Art des Quadrierers kann, wie dies auch aus Fig. 1 ersichtlich ist, dem Quadrierer Q im Korrektursignalweg k eine Pegelanpassungsschaltung P vorgeschaltet sein.

Dadurch, daß aus dem elektrischen Sendesignal durch Quadrieren und nachfolgendes Differenzieren ein Korrektursignal abgeleitet wird, das nach einer erforderlichen Abschwächung dem elektrischen Sendesignal hinzugefügt wird, werden in dem den Lichtwellenleiter LWL enthaltenden optischen Telekommunikationssystem durch Zusammenwirken von Laserchirp und Faserdispersion verursachte Signalverzerrungen elektrisch kompensiert:

Es wird ausgegangen von einem zumindest angenähert linearen und phasenstarren Zusammenhang zwischen der Lichtleistung des Lasers EOW und dessen optischer Frequenz, der sich mit

$$\Delta f = \frac{\delta}{\alpha}\, P(t) \qquad\qquad (1)$$

beschreiben läßt, worin

$\Delta f$ die Frequenzabweichung des Lasers von dem bei mittlerer Lichtleistung $P_o$ gegebenen Mittelwert,

$\alpha$ das Verhältnis von Leistungsänderung zu Stromänderung des Lasers,

$\delta$ das Verhältnis von Frequenzänderung zu Stromänderung des Lasers und

$P(t)$ die durch Modulation verursachte Leistungsänderung des Lasers

ist. Auf Grund dieses (linearen) Zusammenhangs zwischen Lichtleistung und optischer Frequenz hängt bei dispersivem Lichtwellenleiter LWL die - frequenzabhängige - Signallaufzeit auf dem Lichtwellenleiter von der Signalamplitude ab; bezeichnet man die Faserdispersion mit D und die Faserlänge mit L, so weicht die Signallaufzeit von dem bei der mittleren Lichtleistung $P_o$ gegebenen Mittelwert $\tau_o$ um

$$\Delta\tau = D{\cdot}L{\cdot}\Delta f \tag{2}$$

ab. Bei einer durch Modulation verursachten optischen Leistungsänderung

$$P(t) = P_o{\cdot}m{\cdot}\sum_{i=1}^{n} \cos(w_i t), \tag{3}$$

worin $w_i/2\pi$ die Trägerfrequenz des i-ten Übertragungskanals ist, ergibt sich damit am fernen Ende des Lichtwellenleiters LWL eine Lichtleistung

$$P^*(t-\tau_o) \sim P_o{\cdot}m{\cdot}\sum_{i=1}^{n} \cos(w_i(t-\Delta\tau)) = P_o{\cdot}m{\cdot}\sum_{i=1}^{n} \cos(w_i t - w_i DL\tfrac{\delta}{\alpha}P(t)), \tag{4}$$

worin m der (für alle Signalkanäle gleiche) Modulationsindex ist.

In der Praxis, bei kleinen Störungen, ist $w_i{\cdot}D{\cdot}L{\cdot}\frac{\delta}{\alpha}{\cdot}P(t) \ll 1$; beispielsweise kann bei einer Standard-Einmodenfaser

$D = 1{,}18 \cdot 10^{-25}$ s$^2$/m (bei einer Wellenlänge von 1,55 μm) und
$L = 10.000$ m

und bei einem Laser (Fujitsu FLD 150 F2KP)
$\alpha = 0{,}04$ mW/mA und $\delta = 550$ MHz/mA
sein, woraus sich $D{\cdot}L{\cdot}\frac{\delta}{\alpha} = 1{,}77 \cdot 10^{-11}$ s/mW ergibt.

Mit $\cos(u-v) = \cos u \cdot \cos v + \sin u \cdot \sin v$ (Additionstheorem) sowie

$$\cos v = 1 \text{ für } v \ll 1,$$

$$\sin v = v \text{ für } v \ll 1$$

und

$$\frac{d}{dt} \cos wt = - \sin wt,$$

$$\frac{d}{dt} \cos^2 wt = -2w \cdot \cos wt \cdot \sin wt$$

kann man bei Einsetzen von Gl.(3) in Gl.(4) statt Gl.(4) auch schreiben

$$P^*(t-\tau_0) \approx P_o \cdot m \cdot \sum_{i=1}^{n} \cos(w_i t - w_i \cdot \Delta\tau) = P_o \cdot m \cdot \sum_{i=1}^{n} \{\cos w_i t$$
$$+ w_i DL\frac{\delta}{\alpha} P(t) \cdot \sin w_i t\} \quad (6)$$

$$= P(t)$$
$$+ w_i DL\frac{\delta}{\alpha} P(t) \cdot (-\frac{d}{dt} P(t))$$

$$\approx P(t) - \frac{1}{2} w_i DL \cdot \frac{\delta}{\alpha} \cdot \frac{d}{dt} P^2(t).$$

Durch Einsetzen von Gl.(3) in Gl.(6) erhält man für Lage und Intensität des Störterms

$$D \cdot L \cdot \frac{\delta}{\alpha} \cdot \frac{d}{dt} P^2(t) = \frac{1}{2} \cdot D \cdot L \cdot \frac{\delta}{\alpha} \cdot P_o^2 \cdot m^2 \cdot \{\sum_{i=1}^{n} w_i \cdot \sin(2w_i t)$$
$$+ \sum_{i=1}^{n} \sum_{j=i+1}^{n} (w_i + w_j) \cdot \sin((w_i + w_j)t) \quad (7)$$
$$+ (w_j - w_i) \cdot \sin((w_j - w_i)t)\} .$$

Es treten n (n+1)/2 Störlinien auf. Das Signal am fernen Ende des Lichtwellenleiters setzt sich aus dem Originalsignal und einem dazu orthogonalen Störsignal zusammen. Dieses Störsignal ist proportional nicht nur zu Lichtwellenleiterlänge, Dispersion und Chirp, sondern auch zu der Frequenz, bei der die Störung auftritt.

Durch Quadrieren und nachfolgendes Differenzieren des Sendesignals P(t) erhält man nach Abschwächung entsprechend dem Faktor $\frac{1}{2} w_i DL\frac{\delta}{\alpha}$ das Korrektursignal zur elektrischen Kompensation der durch das Zusammenwirken von Laserchirp und Faserdispersion verursachten Signalverzerrungen.

Da der Signalverzerrungsterm an sich sehr klein (etwa 40 bis 60 dB unter dem Nutzsignalpegel) ist, kann zur Erzeugung des Korrektursignals auch das gestörte Empfangssignal verwendet werden, indem aus dem elektrischen Empfangssignal durch Quadrieren und nachfolgendes Differenzieren ein Korrektursignal abgeleitet wird, das nach einer an sich in Form einer Signalabschwächung erforderlichen Pegelkorrektur zum elektrischen Empfangssignal addiert wird.

In Fig. 2 ist ein Ausführungsbeispiel einer Schaltungsanordnung zur elektrischen Kompensation von durch Laserchirp und Faserdispersion verursachten Signalverzerrungen in einem optischen Telekommunikationssystem dargestellt, in der ein Lichtwellenleiter LWL über einen optoelektrischen Wandler OEW zu einem elektrischen Empfangssignalweg e führt. Von dem elektrischen Empfangssignalweg e zweigt ein Korrektursignalweg k ab, der einen Quadrierer Q und ein nachfolgendes Differenzierglied D aufweist und der hinter einem nachfolgenden Signalabschwächer A wieder in den elektrischen Signalweg e einmündet; je nach verwendetem Quadrierer kann dem Quadrierer Q im Korrektursignal k wiederum eine Pegelanpassungsschaltung P vorgeschaltet sein.

Wie sich aus der vorstehenden Erläuterung der Erfindung ergibt, bedarf das durch Quadrieren und nachfolgendes Differenzieren gebildete Korrektursignal noch einer Pegelanpassung, und zwar im Prinzip in Form einer Signalabschwächung; bei schlechtem Wirkungsgrad des Quadrierers bzw. Differenzierglieds und daraus resultierendem zu kleinen Korrektursignalpegel kann indessen aber auch einmal eine Pegelkorrektur in Form einer Korrektursignalverstärkung erforderlich werden.

**Patentansprüche**

1. Verfahren zur elektrischen Kompensation von durch Laserchirp und Faserdispersion verursachten Signalverzerrungen in einem optischen Telekommunikationssystem,
   **dadurch gekennzeichnet,**
   daß aus dem elektrischen Sendesignal durch Quadrieren und nachfolgendes Differenzieren ein Korrektursignal abgeleitet wird, das nach einer an sich in Form einer Signalabschwächung erforderlichen Pegelkorrektur dem elektrischen Sendesignal hinzugefügt wird.

2. Verfahren zur elektrischen Kompensation von durch Laserchirp und Faserdispersion verursachten Signalverzerrungen in einem optischen Telekommunikationssystem, insbesondere nach Anspruch 1,
**dadurch gekennzeichnet,**
daß aus dem elektrischen Empfangssignal durch Quadrieren und nachfolgendes Differenzieren ein Korrektursignal abgeleitet wird, das nach einer an sich in Form einer Signalabschwächung erforderlichen Pegelkorrektur dem elektrischen Empfangssignal hinzugefügt wird.

3. Schaltungsanordnung zur elektrischen Kompensation von durch Laserchirp und Faserdispersion verursachten Signalverzerrungen in einem optischen Telekommunikationssystem,
**dadurch gekennzeichnet,**
daß vom elektrischen Sendesignalweg (s) ein Korrektursignalweg (k) mit einem Quadrierer (Q) und einem nachfolgenden Differenzierglied (D) abzweigt, der hinter einer nachfolgenden Pegelkorrekturschaltung (A) über einen Addiereingang wieder in den elektrischen Signalweg (s) einmündet.

4. Schaltungsanordnung zur elektrischen Kompensation von durch Laserchirp und Faserdispersion verursachten Signalverzerrungen in einem optischen Telekommunikationssystem, insbesondere nach Anspruch 3,
**dadurch gekennzeichnet,**
daß vom elektrischen Empfangssignalweg (e) ein Korrektursignalweg (k) mit einem Quadrierer (Q) und einem nachfolgenden Differenzierglied (D) abzweigt, der hinter einer nachfolgenden Pegelkorrekturschaltung (A) über einen Addiereingang wieder in den elektrischen Signalweg (e) einmündet.

5. Schaltungsanordnung nach Anspruch 3 oder 4,
**dadurch gekennzeichnet,**
daß dem Quadrierer (Q) im Korrektursignalweg (k) eine Pegelanpassungsschaltung (P) vorgeschaltet ist.

## Claims

1. Method for electric compensation of signal distortion in an optical telecommunication system caused by laser chirp and fibre dispersion, characterized in that a correction signal is derived from the electric transmission signal by squaring followed by differentiation and is added to the electric transmission signal after a level correction necessary per se in the form of a signal attenuation.

2. Method for electric compensation of signal distortion in an optical telecommunication system caused by laser chirp and fibre dispersion, particularly according to Claim 1, characterized in that a correction signal is derived from the electric reception signal by squaring followed by differentiation and is added to the electric reception signal after a level correction necessary per se in the form of a signal attenuation.

3. Circuit arrangement for electric compensation of signal distortion in an optical telecommunication system caused by laser chirp and fibre dispersion, characterized in that, branching from the electric transmission signal path (s) is a correction signal path (k) which has a squaring element (Q) and a downstream differentiating element (D) and opens out again into the electric signal path (s) after a downstream level correction circuit (A) via an adding input.

4. Circuit arrangement for electric compensation of signal distortion in an optical telecommunication system caused by laser chirp and fibre dispersion, particularly according to Claim 3, characterized in that, branching from the electric reception signal path (e) is a correction signal path (k) which has a squaring element (Q) and a downstream differentiating element (D) and opens out again into the electric signal path (e) after a downstream level correction circuit (A) via an adding input.

5. Circuit arrangement according to Claim 3 or 4, characterized in that a level adapting circuit (P) is connected upstream of the squaring element (Q) in the correction signal path (k).

## Revendications

1. Procédé de compensation électrique de distorsions de signaux provoquées par des écarts de fréquence d'un laser en fonction de la modulation et par une dispersion dans une fibre optique, dans un système optique de télécommunication,

caractérisé en ce que

on obtient, par élévation au carré puis différentiation du signal électrique d'émission, un signal de correction, que l'on ajoute, après une correction de niveau nécessaire en soi, sous forme d'un affaiblissement du signal, au signal électrique d'émission.

2. Procédé de compensation électrique de distorsions de signaux provoquées par des écarts de fréquence d'un laser en fonction de la modulation et par une dispersion dans une fibre optique, dans un système optique de télécommunication, notamment suivant la revendication 1,
caractérisé en ce que
on obtient, par élévation au carré puis différentiation du signal électrique de réception, un signal de correction, que l'on ajoute, après une correction de niveau nécessaire en soi, sous forme d'un affaiblissement du signal, au signal électrique de réception.

3. Montage de compensation électrique de distorsions de signaux provoquées par des écarts de fréquence d'un laser en fonction de la modulation et par une dispersion dans une fibre optique, dans un système optique de télécommunication,
caractérisé en ce que
il est prévu, en dérivation de la voie (s) électrique de signal d'émission, une voie (k) de signal de correction, qui comporte un dispositif (Q) d'élévation au carré et, en aval, un élément (D) différentiateur et qui débouche de nouveau, derrière un circuit (A) de correction de niveau en aval, par l'intermédiaire d'une entrée d'addition, dans la voie (s) électrique de signal.

4. Montage de compensation électrique de distorsions de signaux provoquées par des écarts de fréquence d'un laser en fonction de la modulation et par une dispersion dans une fibre optique, dans un système optique de télécommunication, notamment suivant la revendication 3,
caractérisé en ce que
il est prévu, en dérivation de la voie (e) électrique de signal de réception, une voie (k) de signal de correction, qui comporte un dispositif (Q) d'élévation au carré et, en aval, un élément (D) différentiateur et qui débouche de nouveau, derrière un circuit (A) de correction de niveau en aval, par l'intermédiaire d'une entrée d'addition, dans la voie (e) électrique de signal.

5. Montage suivant la revendication 3 ou 4,
caractérisé en ce que
il est branché en amont du dispositif (Q) d'élévation au carré dans la voie (k) de signal de correction un circuit (P) d'adaptation de niveau.

## FIG 1

## FIG 2